# EUROPÄISCHE PATENTSCHRIFT

(11) **EP 3 041 804 B1**
(45) Veröffentlichungstag und Bekanntmachung des Hinweises auf die Patenterteilung: **10.05.2017**
(21) Anmeldenummer: 14738852.4
(22) Anmeldetag: 15.07.2014
(51) Int. Cl.: C03C 17/09, C03C 17/245

(54) **VERFAHREN ZUR HERSTELLUNG EINER SCHEIBE MIT EINER ELEKTRISCH LEITFÄHIGEN BESCHICHTUNG MIT ELEKTRISCH ISOLIERTEN FEHLSTELLEN**
METHOD FOR PRODUCING A DISC WITH AN ELECTRICALLY CONDUCTIVE COATING HAVING ELECTRICALLY INSULATED DEFECTS
PROCÉDÉ DE FABRICATION D'UNE VITRE DOTÉE D'UN REVÊTEMENT CONDUCTEUR D'ÉLECTRICITÉ AYANT DES DÉFAUTS ISOLÉS ÉLECTRIQUEMENT

(30) Priorität: 04.09.2013 EP 13182931
(43) Veröffentlichungstag der Anmeldung: 13.07.2016
(73) Patentinhaber: Saint-Gobain Glass France, 92400 Courbevoie (FR)
(72) Erfinder: LETOCART, Philippe, B-4730 Raeren (BE); YEH, Li-Ya, 52511 Geilenkirchen (DE); BEHMKE, Michael, 40227 Düsseldorf (DE)
(74) Vertreter: Lendvai, Tomas
(86) Internationale Anmeldenummer: PCT/EP2014/065104
(87) Internationale Veröffentlichungsnummer: WO 2015/032535

(56) Entgegenhaltungen:
- WO-A1-2004/107268
- WO-A1-2012/154320
- US-A1- 2007 227 586
- T. WATANABE ET AL.: "Generation of a doughnut-shaped beam using a spiral phase plate", REVIEW OF SCIENTIFIC INSTRUMENTS, Bd. 75, Nr. 12, Dezember 2004 (2004-12), Seiten 5131-5135, XP012071937, DOI: 10.1063/1.1819555

## Beschreibung

Die Erfindung betrifft ein Verfahren zur Herstellung einer Scheibe mit einer elektrisch leitfähigen Beschichtung, eine mit dem Verfahren hergestellte Scheibe sowie deren Verwendung.

Eine Art von modernen, aktiven Verglasungen sind Verglasungen mit schaltbaren oder regelbaren optischen Eigenschaften. Bei solchen Verglasungen können beispielsweise die Transmission von Licht in Abhängigkeit einer angelegten elektrischen Spannung aktiv beeinflusst werden. Der Benutzer kann beispielsweise von einen transparenten in einen nicht transparenten Zustand der Verglasung schalten, um den Einblick in einen Raum von außen zu verhindern. Bei anderen Verglasungen kann die Transmission stufenlos geregelt werden, beispielsweise um den Eintrag von Sonnenenergie in einem Raum zu regulieren.

Die bekannten schaltbaren oder regelbaren Verglasungen beruhen auf unterschiedlichen technischen Prinzipien. Elektrochrome Verglasungen sind beispielsweise auf US 20120026573 A1 und WO 2012007334 A1 bekannt, PDLC *(polymer dispersed liquid crystal*)-Verglasungen aus DE 102008026339 A1 und SPD (*suspended particle device*)-Verglasungen aus EP 0876608 B1 und WO 2011033313 A1. Auch bei OLED (*organic light emitting diode*)-Verglasungen können die optischen Eigenschaften, in diesem Fall die Emission von Licht, elektrisch geregelt werden. OLEDs sind beispielsweise aus US 2004227462 A1 und WO 2010112789 A2 bekannt.

Die Verglasungen sind zumeist als Verbundglas ausgeführt. Zwischen den beiden Scheiben des Verbundglases ist die aktive Schicht, welche die schaltbaren Eigenschaften aufweist, zwischen zwei Flächenelektroden angeordnet. Die Flächenelektroden sind mit einer externen Spannungsquelle verbunden, wodurch die an die aktive Schicht angelegte Spannung reguliert werden kann. Die Flächenelektroden sind meist dünne Schichten elektrisch leitfähigen Materials, häufig Indium-Zinnoxid (ITO). Häufig ist zumindest eine der Flächenelektroden direkt auf die Oberfläche einer der Einzelscheiben des Verbundglases aufgebracht, beispielsweise mittels Kathodenzerstäubung (Sputtern). Die Beschichtung kann dabei herstellungsbedingte Mängel, insbesondere Fehlstellen infolge kleiner metallischer Partikel aufweisen. Diese Partikel können beim Betrieb der schaltbaren Verglasung zu Problemen führen. Insbesondere können Kurzschlüsse auftreten, welche zu lokalen Fehlfunktionen führen.

Es ist daher sinnvoll und üblich, solche Fehlstellen der elektrisch leitfähigen Schichten zu beheben. Dafür eignen sich insbesondere Methoden der Laserbearbeitung aufgrund deren hohen Auflösungsvermögens. So ist es möglich, abgeschiedene Metallpartikel durch direkte Laserbestrahlung zu entfernen. Dabei können sich allerdings Bruchstücke des Partikels wieder auf der Beschichtung ablagern, so dass sich neue Fehlstellen ergeben. Ein alternativer Ansatz ist die elektrische Isolierung der Fehlstelle von der umgebenden Beschichtung, so dass im Betrieb der Verglasung der Stromfluss durch die Fehlstelle verhindert wird.

Es ist üblich, zur Isolierung der Fehlstelle einen entschichteten Bereich um die Fehlstelle herum zu erzeugen durch Abtragung der Beschichtung mittels Laserablation. Hierfür wird Laserstrahlung mit dem üblichen, in etwa gaußförmigen Strahlungsprofil verwendet, welcher um die Fehlstelle herum bewegt wird, um den entschichteten Bereich zu erzeugen. Ein Verfahren zur Identifizierung und Isolierung der Fehlstellen einer elektrochromen Vorrichtung ist beispielsweise aus WO2012154320A1 bekannt. Kurzschlüsse und lokale Fehlfunktionen können durch eine solche Isolierung wirkungsvoll verhindert werden. Allerdings sind die entschichteten Bereiche um die Fehlstellen häufig so ausgedehnt, dass sie mit bloßem Auge wahrnehmbar sind, was die Ästhetik der Verglasung nachteilig beeinflusst. Zudem erfordert die Bewegung der Laserstrahlung um die Fehlstelle herum einen komplexen Laserscan-Mechanismus mit einer Vielzahl beweglicher Teile, was das Verfahren zeitaufwendig und störungsanfällig macht.

US2007227586A1 offenbart ein Verfahren zur Identifizierung und Isolierung von Fehlstellen eines Dünnschicht-Photovoltaikmoduls. Auch hier wird Laserstrahlung um die Fehlstelle bewegt, um sie elektrisch zu isolieren.

Der vorliegenden Erfindung liegt die Aufgabe zugrunde, ein verbessertes Verfahren zur Herstellung einer Scheibe mit elektrisch leitfähiger Beschichtung bereitzustellen. Im Vergleich zum Stand der Technik sollen Fehlstellen dabei in wenig auffälliger Weise isoliert werden und das Verfahren soll weniger zeitaufwendig und störungsanfällig sein.

Die Aufgabe der vorliegenden Erfindung wird erfindungsgemäß durch ein Verfahren zur Herstellung einer Scheibe mit elektrisch leitfähiger Beschichtung gemäß Anspruch 1 gelöst. Bevorzugte Ausführungen gehen aus den Unteransprüchen hervor.

Das erfindungsgemäße Verfahren zur Herstellung einer Scheibe mit elektrisch leitfähiger Beschichtung umfasst mindestens die folgenden Verfahrensschritte:
- Aufbringen einer elektrisch leitfähigen Beschichtung auf ein Substrat,
- Identifizieren von Fehlstellen der Beschichtung,
- Fokussieren der Strahlung eines Lasers mit ringförmigen Strahlprofil auf die Beschichtung, wobei das ringförmige Strahlprofil die Fehlstelle umgibt, und
- Erzeugen eines ringförmigen entschichteten Bereichs, indem die Beschichtung im Bereich des Strahlprofils zeitgleich entfernt wird.

Die Aufgabe der Erfindung wird weiter erfindungsgemäß durch eine Scheibe mit elektrisch leitfähiger Beschichtung gelöst, mindestens umfassend ein Substrat mit einer elektrisch leitfähigen Beschichtung, wobei die elektrisch leitfähigen Beschichtung mindestens eine Fehlstelle aufweist, welche mittels der Strahlung eines Lasers mit ringförmigen Strahlprofil von der umgebenden Beschichtung isoliert ist.

Laserstrahlung mit ringförmigem Strahlungsprofil ist dem Fachmann auch unter anderen Bezeichnungen bekannt, beispielsweise: torusförmige Intensitätsverteilung, zirkulare Mode, Doughnut Mode oder Laguerre-Gauß-Mode. Die Intensitätsverteilung ist dabei in der Fokalebene ringförmig verteilt, wobei im Zentrum des Ringes keine Strahlungsintensität vorliegt. Die Strahlung wird erfindungsgemäß so auf die Beschichtung fokussiert, dass die zu isolierende Fehlstelle vollständig innerhalb dieses Zentrums des Ringes angeordnet ist, selbst also nicht von der Laserstrahlung getroffen wird. Das ringförmige Strahlprofil umgibt die Fehlstelle. Das bedeutet, dass ein ringförmiger Bereich um die Fehlstelle herum mit Strahlung signifikanter Intensität beaufschlagt wird, wobei die Beschichtung abgetragen wird (Laserablation) und ein ringförmiger entschichteter (oder beschichtungsfreier) Bereich um die Fehlstelle erzeugt wird. Der entschichtete Bereich isoliert die Fehlstelle elektrisch von der umgebenden leitfähigen Beschichtung, welche bei Verwendung der beschichteten Scheibe stromtragend ist. Die Fehlstelle kann somit nicht von Strom durchflossen werden, wodurch unerwünschte Fehlfunktionen wie Kurzschlüsse, Hotspots oder ähnliches vermieden werden.

Die Beschichtung im Bereich des Strahlprofils wird durch die Laserstrahlung zeitgleich entfernt. Zeitgleich bedeutet dabei, dass die gesamte entschichtete Bereich im gleichen Zeitraum entsteht. Der entschichtete Bereich wird also nicht sukzessive erzeugt durch eine Bewegung der Laserstrahlung um die Fehlstelle herum, wobei Teilbereich nacheinander abgetragen werden, welche am Ende den ringförmigen entschichteten Bereich ergeben.

Gegenüber einer Bewegung eines einfachen Laserstrahls um die Fehlstelle herum zur Isolierung derselben weist das erfindungsgemäße Verfahren eine Reihe von Vorteilen auf. So muss der Laserstrahl für die Laserablation nicht bewegt werden, was aufwendige und potentiell störanfällige Scan-Vorrichtungen überflüssig macht und die zur Bearbeitung benötigte Zeit verkürzt. Der isolierende entschichtete Bereich weist zudem eine deutlich geringe Linienbreite und damit Ausdehnung auf, so dass er dem Betrachter weniger leicht ins Auge fällt, wovon die Ästhetik der resultierenden Verglasung profitiert.

Das ringförmige Strahlprofil kann grundsätzlich auf jede dem Fachmann geläufige Art und Weise erzeugt werden. Das Stahlprofil kann beispielsweise mittels eines phasenoptischen Elements innerhalb des Laserresonators erzeugt werden, insbesondere als Transversalmode TEM₀ᵢ∗. Die Strahlung weist dann bereits beim Verlassen des Laserresonators das ringförmige Strahlungsprofil auf. Es ist aber technisch einfacher und daher zu bevorzugen, herkömmliche Laserstrahlung mit näherungsweise gaußförmigem Strahlungsprofil, insbesondere die Transversalmode TEM₀₀, erst nach dem Verlassen des Laserresonators in die Strahlung mit ringförmigem Strahlprofil umzuwandeln. Diese Umwandlung kann beispielsweise mit einem sogenannten Axicon und einer im Strahlengang dahinter angeordneten Linse erfolgen.

Das ringförmige Strahlprofil wird in einer besonders vorteilhaften Ausführung mittels einer Phasenplatte aus dem näherungsweise gaußförmigen Strahlprofil erzeugt. Das ist besonders vorteilhaft im Hinblick auf die Einfachheit des optischen Aufbaus.

Die Phasenplatte ist in einer bevorzugten Ausgestaltung eine Spiral-Phasenplatte (*spiral phase plate*). Ein solche Phasenplatte und die Erzeugung des ringförmigen Strahlprofils ist beispielsweise beschrieben in Watanabe et al.: "Generation of a doughnut-shaped beam using a spiral phase plate". Rev. Sci. Instrum. 75 (2004) 5131.

Die Phasenplatte ist in einer weiteren bevorzugten Ausgestaltung eine segmentierte Phasenplatte. Diese besteht aus mehreren, beispielsweise vier doppelbrechenden λ/2-Plättchen in verschiedenen Winkelstellungen. Die einzelnen Segmente sorgen dafür, dass gegenüberliegende Teilstrahlen einen Phasenversatz zueinander haben, so dass man beim Fokussieren im Zentrum des Strahlprofils destruktive Interferenz der Teilstrahlen erhält.

Die elektrisch leitfähige Beschichtung wird in einer bevorzugten Ausführung durch physikalische Gasphasenabscheidung (*physical vapour deposition,* PVD) auf das Substrat aufgebracht. Besonders bevorzugt wird die Methode des Kathodenzerstäubens, insbesondere magnetfeldunterstützten Kathodenzerstäubens (Magnetron-Sputtern) angewandt. Dadurch können elektrisch leitfähige Beschichtungen in hoher elektrischer und optischer Qualität schnell, kostengünstig und bei Bedarf auch großflächig erzeugt werden. Die Fehlstellen sind insbesondere unerwünschte elektrisch leitfähige Partikel, insbesondere metallische oder kristalline Partikel, in der elektrisch leitfähigen Beschichtung. Die Partikel können in die Beschichtung eingelagert sein oder auf oder unter der Beschichtung angeordnet sein. Solche Partikel können sich beispielweise bei einem PVD-Prozess vom Target ablösen und auf dem Substrat niederlegen. Die metallischen Partikel weisen üblicherweise Größen von 1 µm bis 1 mm auf, insbesondere von 10 µm bis 500 µm und im Speziellen von 25 µm bis 150 µm. Grundsätzliche eignet sich das erfindungsgemäße Verfahren jedoch auch für andere Arten von Fehlstellen, die von der umgebenden Beschichtung isoliert werden sollen, um im Betrieb der Scheibe nicht vom elektrischen Strom durchflossen zu werden.

Die Identifizierung der Fehlstellen erfolgt mittels an sich bekannter Verfahren, beispielsweise optisch-bildgebender Verfahren, mikroskopischer Verfahren oder thermographischer Verfahren. Die Identifizierung umfasst eine hinreichend genaue Positionsbestimmung der Fehlstelle, um die Laserstrahlung anschließend auf die Fehlstelle zu richten.

Nach der Durchführung des erfindungsgemäßen Verfahrens ist die Fehlstelle von einem ringförmigen, beschichtungsfreien (oder entschichteten) Bereich umgeben. Da dieser Bereich durch Laserablation mit ringförmigem Strahlungsprofil erzeugt wurde, ist die Linienbreite konstant. Die Linienbreite des entschichteten Bereichs beträgt in einer vorteilhaften Ausgestaltung von 5 µm bis 100 µm, bevorzugt von 15 µm bis 50 µm.

Der Durchmesser des ringförmigen Strahlungsprofils wird bevorzugt so gewählt, dass er an die Größe der Fehlstelle angepasst ist. Der Durchmesser sollte möglichst klein sein, damit der entschichtete Bereich möglichst unauffällig ist, aber groß genug, um die Fehlstelle sicher von der stromtragenden Beschichtung zu isolieren. Der Durchmesser kann beispielsweise durch die Phasenplatte zur Erzeugung des Strahlprofils beeinflusst werden. Der Durchmesser des entschichteten Bereichs ist insbesondere bevorzugt kleiner als 1 mm, besonders bevorzugt kleiner als 0,25 mm.

Die Laserstrahlung wird mittels eines fokussierenden Elements auf die elektrisch leitfähige Beschichtung fokussiert.

Die Linienbreite *B* des ringförmigen beschichtungsfreien Bereichs kann insbesondere durch die Wellenlänge λ der Laserstrahlung, die Brennweite f des fokussierenden Elements und dem Durchmesser d des auf das fokussierende Element treffenden kollimierten Strahls beeinflusst werden. Die Linienbreite *B* ist außerdem von der Phasenplatte zur Erzeugung des ringförmigen Strahlprofils abhängig, sofern eine solche verwendet wird.

Die Wellenlänge der Laserstrahlung beträgt bevorzugt von 200 nm bis 2500 nm. In diesem Wellenlängenbereich werden mit dem erfindungsgemäßen Verfahren gute Ergebnisse bei der Isolierung von Fehlstellen erzielt. Die Wellenlänge beträgt besonders bevorzugt von 300 nm bis 1500 nm. In diesem Wellenlängenbereich ist aufgrund der kommerziellen Verfügbarkeit von geeigneten Lasern das Verfahren besonders kostengünstig durchzuführen. Es hat sich gezeigt, dass besonders gute Ergebnisse im Wellenlängenbereich von 325 nm bis 600 nm erzielt werden.

Die Erfindung ist nicht auf eine bestimmte Art von Lasern beschränkt. Vielmehr kann der Fachmann den Laser abhängig von den Gegebenheiten im Einzelfall wählen. In einer bevorzugten Ausführung wird als Laser ein Festkörper-Laser verwendet, beispielsweise ein Nd:Cr:YAG-Laser, ein Nd:Ce:YAG-Laser, ein Yb:YAG-Laser, besonders bevorzugt ein Nd:YAG-Laser. Die Strahlung des Lasers kann zur Erzeugung der gewünschten Wellenlänge einfach oder mehrfach frequenzverdoppelt werden. Es können aber auch andere Laser verwendet werden, beispielsweise Faserlaser, Halbleiterlaser, Excimerlaser oder Gaslaser.

Die Brennweite des fokussierenden Elements bestimmt die Ausdehnung des Fokus der Laserstrahlung. Die Brennweite des fokussierenden Elements beträgt bevorzugt von 10 mm bis 500 mm, besonders bevorzugt von 50 mm bis 200 mm, ganz besonders bevorzugt von 60 mm bis 100 mm. Damit werden besonders gute Ergebnisse erzielt. Eine kleinere Brennweite des optischen Elements erfordert einen zu geringen Arbeitsabstand zwischen elektrisch leitfähiger Beschichtung und optischem Element. Eine größere Brennweite führt zu einer zu großen Ausdehnung des Laserfokus, wodurch die Linienbreite des entschichteten Bereichs unerwünscht groß und die isolierte Fehlstelle für einen Betrachter störend auffällig wird.

Der Laser wird bevorzugt gepulst betrieben. Das ist besonders vorteilhaft im Hinblick auf eine hohe Leistungsdichte und eine effektive Erzeugung des erfindungsgemäßen entschichteten Bereichs Die Pulsfrequenz beträgt bevorzugt von 1 kHz bis 200 kHz, besonders bevorzugt von 10 kHz bis 100 kHz, beispielsweise von 30 kHz bis 60 kHz. Die Pulslänge beträgt bevorzugt von 1 ps bis 1000 ns, besonders bevorzugt von 1 ns bis 100 ns. Das ist besonders vorteilhaft im Hinblick auf die Leistungsdichte der Strahlung beim Entschichten.

Die Leistungsdichte im Fokus der Laserstrahlung beträgt bevorzugt von 0,01 bis 100 10⁸ W/cm², besonders bevorzugt von 1 bis 10 10⁸ W/cm². Damit werden besonders gute Ergebnisse hinsichtlich der Entschichtung erreicht.

Es hat sich gezeigt, dass der entschichtete Bereich bei geeigneter Einstellung der Bearbeitungsparameter, insbesondere im Rahmen der hier ausgeführten bevorzugten Bereiche, bereits nach Auftreffen eines oder einiger weniger Laserpulse erzeugt, die Beschichtung also ringförmig abgetragen ist. Das Verfahren ermöglicht als eine sehr geringe Bestrahlungsdauer und Bearbeitungszeit. Die Bestrahlungsdauer beträgt bevorzugt kleiner als 0,5 s, besonders bevorzugt kleiner als 0,1 s und ganz besonders bevorzugt kleiner als 0,05 s.

Um die Laserstrahlung auf die Fehlstelle zu richten, ist in einer vorteilhaften Ausführung das Substrat ortsfest. Die Positionierung erfolgt durch eine Bewegung des fokussierenden Elements und des Lasers oder durch eine Bewegung des fokussierenden Elements und eines Lichtwellenleiters. Die zu bewegenden Elemente sind dazu bevorzugt auf einem Kreuztisch (XY-Tisch) angeordnet.

Alternativ kann die relative Bewegung von Strahlung und Substrat natürlich auch durch Bewegung des Laserstrahls mittels einer optischen Scan-Vorrichtung erfolgen oder durch eine Bewegung des Substrats bei ortfester Laserstrahlung. Auch Kombinationen der hier beschriebenen Alternativen sind prinzipiell denkbar.

Zwischen dem Laser und dem fokussierenden optischen Element kann die Strahlung des Lasers durch zumindest einen Lichtwellenleiter, beispielsweise eine Glasfaser geleitet werden. Es können auch weitere optische Elemente im Strahlengang des Lasers angeordnet sein, beispielsweise Kollimatoren, Blenden, Filter oder Elemente zur Frequenzverdopplung.

Die elektrisch leitfähige Beschichtung ist insbesondere eine Dünnschicht oder ein Stapel dünner Schichten.

Die elektrisch leitfähige Beschichtung ist in einer bevorzugten Ausgestaltung eine beheizbare Beschichtung. Eine solche Beschichtung ist dafür vorgesehen, mit Stromsammelschienen (Busbars) elektrisch kontaktiert zu werden, zwischen denen ein elektrischer Strom durch die Beschichtung fließt. Die Stromsammelschienen sind meist als Streifen einer metallischen Folie, beispielsweise verzinnten Kupferfolie, oder als aufgedruckt und eingebrannte Paste, insbesondere Siebdruckpaste mit Silberpartikeln und Glasfritten, ausgeführt. Durch die Joule'sche Wärmeentwicklung infolge des elektrischen Widerstands der Beschichtung wird die Heizwirkung erreicht. Durch die erfindungsgemäße Isolierung von Fehlstellen kann bei einer solchen Beschichtung insbesondere die Homogenität der Heizleistung verbessert und das Auftreten sogenannter Hotspots verhindert werden.

Die elektrisch leitfähige Beschichtung ist in einer weiteren bevorzugten Ausgestaltung eine Flächenelektrode einer Verglasung mit elektrisch schaltbaren oder regelbaren optischen Eigenschaften. Zu diesen Verglasungen, welche dem Fachmann an sich bekannt sind, zählen insbesondere elektrochrome Verglasungen, PDLC-Verglasungen (*polymer dispersed liquid crystal*), SPD-Verglasungen (*suspended particle device*) und elektrolumineszente Verglasungen wie beispielsweise OLEDs. Solche Verglasungen enthalten eine aktive Schicht mit den schaltbaren oder regelbaren optischen Eigenschaften, welche zwischen zwei Flächenelektroden angeordnet ist. Durch die Flächenelektroden wird kann eine Spannung an die aktive Schicht angelegt werden, wodurch die optischen Eigenschaften einstellbar sind. Die elektrische Kontaktierung der Flächenelektroden erfolgt üblicherweise über Stromsammelschienen. Durch die erfindungsgemäße Isolierung von Fehlstellen der Flächenelektrode können bei solchen Verglasungen Kurzschlüsse vermieden werden, die ansonsten zu lokalen Funktionsstörungen führen würden.

Die Erfindung ist aber grundsätzlich nicht auf die vorstehend genannten Arten von elektrisch leitfähigen Beschichtungen beschränkt. Das erfindungsgemäße Verfahren kann vielmehr prinzipiell auf jede beliebige elektrisch leitfähige Beschichtung angewandt werden, bei der die elektrische Isolierung von Fehlstellen wünschenswert oder erforderlich ist.

Die elektrisch leitfähige Beschichtung enthält bevorzugt zumindest Silber, Gold, Kupfer, Wolfram, Graphit, Molybdän oder ein transparentes leitfähiges Oxid (*transparent conductive oxide,* TCO), beispielsweise Indium-Zinnoxid (ITO) oder Fluor-dotiertes Zinnoxid (SnO₂:F). Besonders verbreitet sind Beschichtungen enthaltend Silber als transparente beheizbare Beschichtungen und Beschichtungen enthalten TCO als transparente Flächenelektroden.

Die elektrisch leitfähige Beschichtung weist bevorzugt eine Dicke kleiner oder gleich 5 µm auf, besonders bevorzugt kleiner oder gleich 2 µm, ganz besonders bevorzugt kleiner oder gleich 1 µm und insbesondere kleiner oder gleich 500 nm. Das erfindungsgemäße Verfahren ist auf Beschichtungen mit solchen Dicken besonders wirkungsvoll anwendbar. Die Dicke der Beschichtung richtet sich im Einzelfall natürlich nach dem verwendeten Material und dem Einsatzzweck der Beschichtung und beträgt beispielsweise von 5 nm bis 2 µm auf oder von 10 nm bis 1 µm. Dicken von 30 nm bis 500 nm, bevorzugt 50 nm bis 200 nm sind insbesondere für Flächenelektroden üblich.

Das Substrat enthält bevorzugt zumindest Glas, beispielsweise Quarzglas, Borosilikatglas oder Kalk-Natron-Glas, besonders bevorzugt Kalk-Natron-Glas, oder zumindest ein Polymer, insbesondere transparentes Polymer, besonders bevorzugt Polycarbonat (PC) oder Polymethylmethacrylat (PMMA). Die Dicke des Substrats richtet sich nach der Verwendung im Einzelfall und beträgt üblicherweise von 0,5 mm bis 15 mm, insbesondere von 1 mm bis 5 mm. Das Substrat kann klar und transparent sein oder auch getönt oder gefärbt. Das Substrat kann plan sein, aber auch leicht oder stark in einer Richtung oder in mehreren Richtungen des Raumes gebogen.

Die erfindungsgemäße Scheibe mit elektrisch leitfähiger Beschichtung beziehungsweise die erfindungsgemäß hergestellte Scheibe wird bevorzugt als beheizbare Scheibe, insbesondere Fensterscheibe eines Gebäudes oder Fahrzeugs verwendet, wobei die elektrisch leitfähige Schicht eine Heizschicht ist. Die erfindungsgemäße Scheibe beziehungsweise die erfindungsgemäß hergestellte Scheibe wird alternativ bevorzugt als Bestandteil einer Verglasung mit elektrisch schalt- oder regelbaren optischen Eigenschaften, wobei die elektrisch leitfähige Beschichtung bevorzugt eine Flächenelektrode ist. Die Verglasung mit elektrisch schalt- oder regelbaren optischen Eigenschaften ist dabei bevorzugt eine elektrochrome Verglasung, PDLC-Verglasung, SPD-Verglasung oder elektrolumineszente Verglasung, insbesondere OLED.

Die Erfindung umfasst weiter die Verwendung von Laserstrahlung mit ringförmigem Strahlungsprofil zur Isolierung von Fehlstellen einer elektrisch leitfähigen Beschichtung auf einem Substrat durch Laserablation.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Anordnung zur Durchführung des erfindungsgemäßen Verfahrens,
- Fig. 2: eine schematische Darstellung des ringförmigen Strahlprofils der Laserstrahlung,
- Fig. 3: eine Draufsicht auf eine Ausgestaltung der erfindungsgemäßen Scheibe,

Fig. 4 eine Draufsicht auf eine gemäß dem Stand der Technik hergestellten Scheibe und Fig. 5 ein Flussdiagramm einer Ausführungsform des erfindungsgemäßen Verfahrens, umfassend die folgenden Schritte (A)-(E) in Reihenfolge:
(A) Aufbringen einer elektrisch leitfähigen Beschichtung (2) auf ein Substrat (1) aus Glas mittels magnetfeldunterstützter Kathodenzerstäubung,
(B) Untersuchen der Beschichtung (2) auf Fehlstellen (3), insbesondere metallische Partikel, mittels eines Mikroskops,
(C) Erzeugen von Strahlung (5) eines Lasers (6) mit ringförmigem Strahlprofil (P) mittels einer segmentierten Phasenplatte (7),
(D) Fokussieren der Strahlung (5) auf die Beschichtung (2), so dass das ringförmige Strahlprofil (P) eine Fehlstelle (3) umgibt und
(E) Erzeugen eines ringförmigen beschichtungsfreien Bereichs (8) um die Fehlstelle (3).

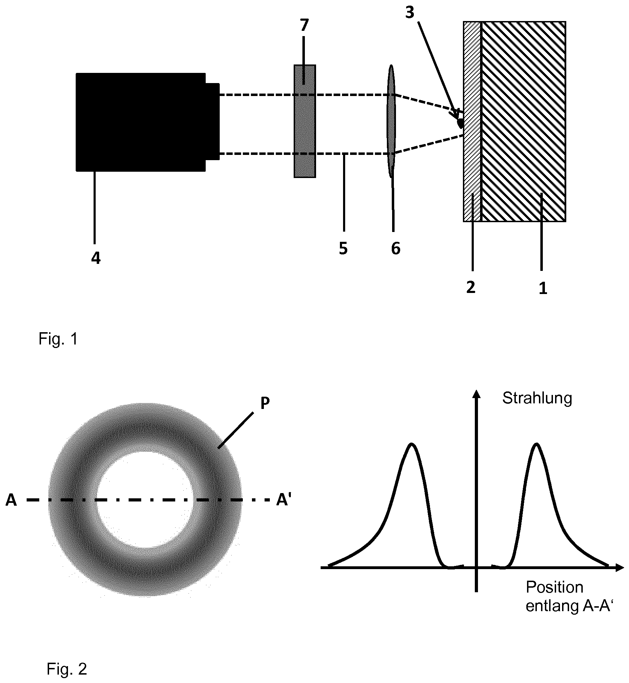

Fig. 1 zeigt schematisch eine beschichtete Scheibe während der Durchführung einer Ausführungsform des erfindungsgemäßen Verfahrens. Die Scheibe enthält eine Substrat 1 aus Natron-Kalk-Glas mit einer Dicke von beispielsweise 2,1 mm und eine elektrisch leitfähige Beschichtung 2 aus ITO mit einer Dicke von etwa 100 nm. Die Scheibe ist als Bestandteil einer elektrochromen Verglasung vorgesehen, wobei die Beschichtung 2 als transparente Flächenelektrode dienen soll.

Die Beschichtung 2 weist eine Fehlstelle 3 auf. Die Fehlstelle 3 ist ein Metallpartikel mit einer Größe von etwa 50 µm, welches während des Aufbringens der Beschichtung 2 auf das Substrat 1 mittels Magnetron-Sputterns in die Beschichtung 2 eingebracht worden ist. Wird diese Fehlstelle 3 in der elektrochromen Verglasung von Strom durchflossen, so kann sie zu Kurzschlüssen führen, welche in lokalen Fehlfunktionen der Verglasung resultieren.

Das erfindungsgemäße Verfahren sieht daher vor, die Fehlstelle 3 von der umgebenden, im Verwendungseinsatz stromtragenden Beschichtung 2 elektrisch zu isolieren. Hierzu soll ein entschichteter Bereich um die Fehlstelle 3 erzeugt werden. Diese Entschichtung erfolgt erfindungsgemäß durch Laserablation mit Laserstrahlung mit ringförmigem Strahlungsprofil. Das ringförmige Strahlungsprofil wird aus dem gaußförmigen Strahlungsprofil eines Laser 4 erzeugt. Der Laser 4 ist beispielsweise ein frequenzverdoppelter Nd:YAG-Laser. Die Wellenlänge der Laserstrahlung 5 beträgt beispielsweise 532 nm. Die Laserstrahlung 5 durchläuft eine Phasenplatte 7 (Spiral-Phasenplatte) und wird durch eine f-theta-Linse 6 mit einer Brennweite von beispielsweise 80 mm auf die Beschichtung 2 fokussiert. Durch die Phasenplatte 7 weisen gegenüberliegende Teilstrahlen einen Phasenversatz auf und beim Fokussieren tritt im Zentrum des Strahlprofils destruktive Interferenz auf. Dadurch wird in der Ebene der Beschichtung 2 ein Fokus mit ringförmigem Strahlungsprofil erzeugt. Die Strahlung 5 ist so auf die Beschichtung 2 gerichtet, dass die Fehlstelle 3 von dem ringförmigen Strahlungsprofil umgeben wird. Der Laser 4, die Phasenplatte 7 und die Linse 6 sind dazu auf einem nicht dargestellten XY-Tisch montiert.

Die Laserstrahlung 5 weist beispielsweise eine Pulslänge von 10 ns und eine Pulsfolgefrequenz von 20 kHz auf. Die Leistungsdichte im Fokus beträgt beispielsweise 2*10⁸ W/cm². Bereits nach einem oder wenigen Pulsen ist durch Laserablation der gewünschte isolierende Bereich um die Fehlstelle entstanden.

Fig. 2 veranschaulicht schematisch das erfindungsgemäße ringförmige Strahlungsprofil P der Laserstrahlung 5. Im linken Teil der Figur ist eine Draufsicht auf den Fokus der Strahlung 5 dargestellt. Der rechte Teil der Figur zeigt die Strahlungsintensität entlang des Querschnitts A-A durch die Mitte des ringförmigen Profils P. Der Fokus weist im Zentrum keine Strahlungsintensität auf. Im erfindungsgemäßen Verfahren wird die Fehlstelle in diesem Zentrum positioniert und die umgebende Beschichtung durch die ringförmige Strahlung 5 entfernt.

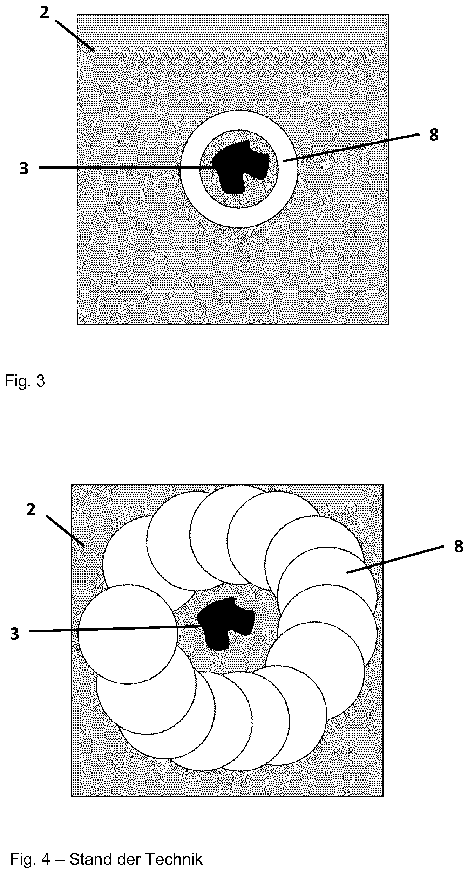

Fig. 3 zeigt eine Draufsicht auf eine erfindungsgemäße Scheibe im Bereich einer Fehlstelle 3 nach der Durchführung des erfindungsgemäßen Verfahrens. Die elektrisch leitfähige Beschichtung 2 weist einen ringförmigen, entschichteten Bereich 8 auf. Der Bereich 8 isoliert die Fehlstelle 3 von der umgebenden Beschichtung 2. Die Fehlstelle 3 ist ein Metallpartikel mit einer Größe von etwa 50 µm. Der ringförmige Bereich 8 hat beispielsweise einen mittleren Durchmesser von etwa 100 µm und eine Linienbreite von 20 µm. Der entschichtete Bereich 8 ist aufgrund seiner geringen Ausmaße durch einen Betrachter kaum wahrzunehmen und beeinträchtigt die Scheibe daher nicht in ihrer Ästhetik.

Fig. 4 zeigt zum Vergleich eine Draufsicht auf eine beschichtete Scheibe mit isolierter Fehlstelle nach dem Stand der Technik. Die Scheibe weist ebenfalls einen entschichteten Bereich 8 um die Fehlstelle 3 auf, der allerdings durch Bewegung eines Laserstrahls mit dem üblichen gaußförmigen Strahlungsprofil um die Fehlstelle herum erzeugt wurde. Durch die notwendige Bewegung der Laserstrahlung ist dafür ein komplizierter technischer Aufbau mit einer größeren Zahl von beweglichen und daher potentiell störungsanfälligen Teilen. Die Entschichtungsprozedur ist zudem zeitaufwendiger als nach dem erfindungsgemäßen Verfahren. Ein weiterer Nachteil sind die erheblich größeren Ausmaße des Bereichs 8, der für den Betrachter daher deutlich auffälliger ist. Dies ergibt sich aus der Größe des Laserfokus. Der entschichtete Bereich, der mit der herkömmlichen Methode erzeugt worden ist, hat üblicherweise eine Breite von etwa 30 µm bis 100 µm, und ist damit deutlich größer als die Linienbreite, die mit dem erfindungsgemäßen ringförmigen Strahlungsprofils bei sonst vergleichbaren experimentellen Parametern erreicht werden kann. Dadurch wird auch die Gesamtgröße des entschichteten Bereichs 8 deutlich größer.

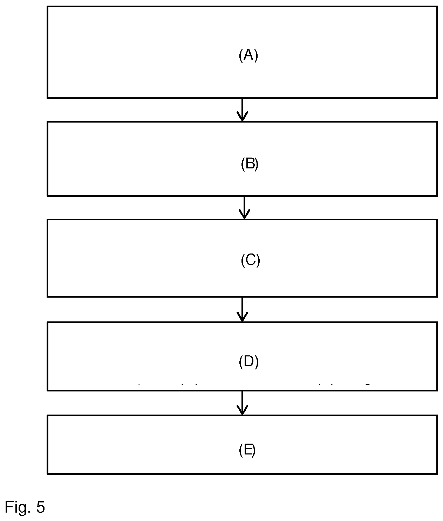

Fig. 5 zeigt ein Flussdiagramm eines Ausführungsbeispiels des erfindungsgemäßen Verfahrens zur Herstellung einer Scheibe mit elektrisch leitfähiger Beschichtung.

### Beispiel

Es wurden zehn Testscheiben nach dem erfindungsgemäßen Verfahren entsprechend dem in Figur 1 dargestellten Ausführungsbeispiel hergestellt. Die Scheiben wurden daraufhin in elektrochromen Verglasungen verwendet, wobei die Beschichtung 2 nach elektrischer Kontaktierung als Flächenelektrode fungierte. Die elektrochromen Verglasungen wurden im Betrieb einer Gruppe von Betrachtern vorgeführt, welche die Verglasungen nach optischen Kriterien bewerten sollten. Insbesondere wurde das Vorhandensein von lokalen Fehlfunktionen der elektrochromen Verglasungen und die Sichtbarkeit von isolierten Fehlstellen (beziehungsweise der entschichteten Bereiche 8) innerhalb der Beschichtung 2 bewertet werden. Die repräsentativen Beobachtungen sind in Tabelle 1 zusammengefasst.

### Vergleichsbeispiel 1

Es wurden zehn Scheiben nach dem Stand der Technik hergestellt. Die Isolierung der Fehlstellen 3 erfolgte dabei nicht durch Laserstrahlung mit ringförmiger Strahlungsintensität, sondern durch Bewegung von Strahlung mit gaußförmiger Strahlungsintensität um die Fehlstelle herum. Die Verglasungen wurden ebenfalls in elektrochromen Verglasungen verwendet und nach den gleichen Kriterien bewertet wie im Beispiel. Die Beobachtungen sind in Tabelle 1 zusammengefasst.

### Vergleichsbeispiel 2

Es wurden zehn Scheiben mit der elektrisch leitfähigen Beschichtung 2 versehen und in elektrochromen Verglasungen verwendet, ohne dass Fehlstellen 3 zuvor identifiziert und isoliert worden sind. Die Verglasungen wurden nach den gleichen Kriterien bewertet wie im Beispiel. Die Beobachtungen sind in Tabelle 1 zusammengefasst.

**Tabelle 1**

| | Lokale Fehlfunktionen der schaltbaren Verglasung | Sichtbarkeit von isolierten Fehlstellen 3 |
|---|---|---|
| Vergleichsbeispiel 2 | *vorhanden* | *(keine)* |
| Vergleichsbeispiel 1 | *nicht vorhanden* | *deutlich* |
| Beispiel | *nicht vorhanden* | *verringert* |

Durch das erfindungsgemäße Verfahren können lokale Fehlfunktionen, welche insbesondere auf Kurzschlüsse an Fehlstellen der elektrisch leitfähigen Beschichtung zurückzuführen sind, wirkungsvoll vermieden werden. Dies erfolgt durch die Isolierung der Fehlstellen durch Laserablation, wobei erfindungsmäße Laserstrahlung mit ringförmigen Strahlungsprofil verwendet wird. Die entschichteten Bereiche um die Fehlstellen sind bei den erfindungsgemäßen Scheiben deutlich schwieriger zu erkennen. Zudem ist das erfindungsgemäße Verfahren deutlich weniger zeitintensiv und der technische Aufbau weniger störungsanfällig. Diese Ergebnisse waren für den Fachmann unerwartet und überraschend.

### Bezugszeichenliste:

- (1): Substrat
- (2): elektrisch leitfähige Beschichtung
- (3): Fehlstelle der Beschichtung 2
- (4): Laser
- (5): Strahlung des Lasers 4
- (6): fokussierendes Element
- (7): Phasenplatte
- (8): entschichteter Bereich
- (P): ringförmiges Strahlprofil

## Patentansprüche

1. Verfahren zur Herstellung einer Scheibe mit elektrisch leitfähiger Beschichtung, mindestens umfassend:
- Aufbringen einer elektrisch leitfähigen Beschichtung (2) auf ein Substrat (1),
- Identifizieren von Fehlstellen (3) der Beschichtung (2),
- Fokussieren der Strahlung (5) eines Lasers (4) mit ringförmigem Strahlprofil (P) auf die Beschichtung (2), wobei das ringförmige Strahlprofil (P) die Fehlstelle (3) umgibt, und
- Erzeugen eines ringförmigen entschichteten Bereichs (8), indem die Beschichtung (2) im Bereich des Strahlprofils (P) zeitgleich entfernt wird.

2. Verfahren nach Anspruch 1, wobei die Beschichtung (2) durch physikalische Gasphasenabscheidung auf das Substrat (1) aufgebracht wird, bevorzugt durch Kathodenzerstäuben, insbesondere magnetfeldunterstütztes Kathodenzerstäuben.

3. Verfahren nach Anspruch 1 oder 2, wobei die Fehlstellen (3) leitfähige Partikel, insbesondere metallische oder kristalline Partikel, insbesondere mit einer Größe von 1 µm bis 1 mm, in der Beschichtung (2) sind.

4. Verfahren nach einem der Ansprüche 1 bis 3, wobei die Wellenlänge der Strahlung (5) von 200 nm bis 2500 nm beträgt, bevorzugt von 300 nm bis 1500 nm und besonders bevorzugt von 325 nm bis 600 nm.

5. Verfahren nach einem der Ansprüche 1 bis 4, wobei das ringförmige Strahlprofil mittels einer Phasenplatte (7) erzeugt wird, bevorzugt einer Spiral-Phasenplatte oder einer segmentierten Phasenplatte (7).

6. Verfahren nach einem der Ansprüche 1 bis 5, wobei der Laser (4) gepulst betrieben wird und die Pulslänge der Strahlung (5) von 1 ps bis 1000 ns, bevorzugt von 1 ns bis 100 ns beträgt und die Pulsfolgefrequenz bevorzugt von 1 kHz bis 200 kHz beträgt.

7. Verfahren nach einem der Ansprüche 1 bis 6, wobei die Leistungsdichte der Strahlung (5) auf der Beschichtung (2) von 0,01 bis 100 10⁸ W/cm², bevorzugt von 1 bis 10 10⁸ W/cm² beträgt.

8. Verfahren nach einem der Ansprüche 1 bis 7, wobei die Strahlung (5) mittels eines fokussierenden Elements (6) auf die Beschichtung (2) fokussiert wird, welches eine Brennweite von 10 mm bis 500 mm, bevorzugt von 50 mm bis 200 mm, besonders bevorzugt von 60 mm bis 100 mm aufweist.

9. Verfahren nach einem der Ansprüche 1 bis 8, wobei die Beschichtung (2) zumindest Silber oder ein transparentes, elektrisch leitfähiges Oxid enthält.

10. Verfahren nach einem der Ansprüche 1 bis 9, wobei die Beschichtung (2) eine Dicke von kleiner oder gleich 5 µm aufweist, bevorzugt kleiner oder gleich 2 µm, besonders bevorzugt kleiner oder gleich 1 µm, ganz besonders bevorzugt kleiner oder gleich 500 nm.

11. Verfahren nach einem der Ansprüche 1 bis 10, wobei das Substrat (1) zumindest Glas, bevorzugt Natron-Kalk-Glas, oder ein transparentes Polymer, bevorzugt Polycarbonat, enthält.

12. Scheibe mit elektrisch leitfähiger Beschichtung, mindestens umfassend ein Substrat (1) mit einer elektrisch leitfähigen Beschichtung (2), wobei die Beschichtung (2) mindestens eine Fehlstelle (3) aufweist, welche mittels der Strahlung (5) eines Lasers (4) mit ringförmigem Strahlprofil (P) von der umgebenden Beschichtung (2) isoliert ist.

13. Scheibe nach Anspruch 12, wobei die Fehlstelle (3) von einem ringförmigen, entschichteten Bereich (8) mit konstanter Linienbreite umgeben ist.

14. Scheibe nach Anspruch 13, wobei die Linienbreite des entschichteten Bereichs (8) von 5 µm bis 100 µm, bevorzugt von 15 µm bis 50 µm beträgt.

15. Verwendung einer Scheibe nach einem der Ansprüche 12 bis 14 oder einer mit dem Verfahren nach einem der Ansprüche 1 bis 10 hergestellten Scheibe als beheizbare Scheibe, insbesondere Fensterscheibe eines Gebäudes oder Fahrzeugs, oder als Bestandteil einer Verglasung mit elektrisch schalt- oder regelbaren optischen Eigenschaften, insbesondere einer elektrochromen Verglasung, PDLC-Verglasung, SPD-Verglasung oder elektrolumineszenten Verglasung.

## Claims

1. Method for producing a pane with an electrically conductive coating, comprising at least:
- applying an electrically conductive coating (2) on a substrate (1),
- identifying defects (3) of the coating (2),
- focusing the radiation (5) of a laser (4) with an annular beam profile (P) on the coating (2), wherein the annular beam profile (P) surrounds the defect (3), and
- producing an annular de-coated region (8), by simultaneously removing the coating (2) in the region of the beam profile (P).

2. Method according to claim 1, wherein the coating (2) is applied by physical vapor deposition on the substrate (1), preferably by cathodic sputtering, in particular magnetically enhanced cathodic sputtering.

3. Method according to claim 1 or 2, wherein the defects (3) are conductive particles, in particular metallic or crystalline particles, in particular with a size of 1 µm to 1 mm, in the coating (2).

4. Method according to one of claims 1 through 3, wherein the wavelength of the radiation (5) is from 200 nm to 2500 nm, preferably from 300 nm to 1500 nm, and particularly preferably from 325 nm to 600 nm.

5. Method according to one of claims 1 through 4, wherein the annular beam profile is generated by a phase plate (7), preferably a spiral phase plate or a segmented phase plate (7).

6. Method according to one of claims 1 through 5, wherein the laser (4) is operated in pulsed mode and the pulse length of the radiation (5) is from 1 ps to 1000 ns, preferably from 1 ns to 100 ns, and the pulse sequence frequency is preferably from 1 kHz to 200 kHz.

7. Method according to one of claims 1 through 6, wherein the power density of the radiation (5) on the coating (2) is from 0.01 to 100 10⁸ W/cm², preferably from 1 to 10 10⁸ W/cm².

8. Method according to one of claims 1 through 7, wherein the radiation (5) is focused on the coating (2) by means of a focusing element (6), which has a focal length of 10 mm to 500 mm, preferably of 50 mm to 200 mm, particularly preferably of 60 mm to 100 mm.

9. Method according to one of claims 1 through 8, wherein the coating (2) contains at least silver or a transparent, electrically conductive oxide.

10. Method according to one of claims 1 through 9, wherein the coating (2) has a thickness of less than or equal to 5 µm, preferably less than or equal to 2 µm, particularly preferably less than or equal to 1 µm, most particularly preferably less than or equal to 500 nm.

11. Method according to one of claims 1 through 10, wherein the substrate (1) contains at least glass, preferably soda lime glass, or a transparent polymer, preferably polycarbonate.

12. Pane with an electrically conductive coating, comprising at least a substrate (1) with an electrically conductive coating (2), wherein the coating (2) has at least one defect (3), which is isolated from the surrounding coating (2) by means of the radiation (5) of a laser (4) with an annular beam profile (P).

13. Pane according to claim 12, wherein the defect (3) is surrounded by an annular, de-coated region (8) with a constant line width.

14. Pane according to claim 13, wherein the line width of the de-coated region (8) is from 5 µm to 100 µm, preferably from 15 µm to 50 µm.

15. Use of a pane according to one of claims 12 through 14 or a pane produced with the method according to one of claims 1 through 10 as a heatable pane, in particular a window pane of a building or of a motor vehicle, or as a component of a glazing with electrically switchable or controllable optical properties, in particular of an electrochromic glazing, PDLC glazing, SPD glazing, or electroluminescent glazing.

## Revendications

1. Procédé de fabrication d'une vitre ayant un revêtement conducteur de l'électricité, au moins comportant :
- appliquer un revêtement (2) conducteur de l'électricité sur un substrat (1);
- identifier des défauts (3) du revêtement (2) ;
- focaliser le rayonnement (5) d'un laser (4) avec un profil de faisceau annulaire (P) sur le revêtement (2), le profil de faisceau annulaire (P) entourant le défaut (3) ; et
- produire une région découverte annulaire (8) par retrait simultané du revêtement (2) dans la région du profil de faisceau (P).

2. Procédé selon la revendication 1, dans lequel le revêtement (2) est appliqué sur le substrat (1) par dépôt physique en phase gazeuse, de préférence par pulvérisation cathodique, en particulier par pulvérisation cathodique magnétron.

3. Procédé selon l'une des revendications 1 ou 2, dans lequel les défauts (3) sont des particules conductrices de l'électricité, en particulier des particules métalliques ou cristallines, en particulier ayant une dimension de 1 µm à 1 mm, dans le revêtement (2).

4. Procédé selon l'une des revendications 1 à 3, dans lequel la longueur d'onde du rayonnement (5) est de 200 nm à 2500 nm, de préférence de 300 nm à 1500 nm et de façon particulièrement préférée de 325 nm à 600 nm.

5. Procédé selon l'une des revendications 1 à 4, dans lequel le profil de faisceau annulaire est généré par une plaque de phase (7), de préférence une plaque de phase en spirale ou une plaque de phase segmentée (7).

6. Procédé selon l'une des revendications 1 à 5, dans lequel le laser (4) est actionné en mode pulsé et la longueur d'impulsion du rayonnement (5) est de 1 ps à 1000 ns, de préférence de 1 ns à 100 ns, et la fréquence de succession des impulsions est, de préférence, de 1 kHz à 200 kHz.

7. Procédé selon l'une des revendications 1 à 6, dans lequel la densité de puissance du rayonnement (5) sur le revêtement (2) est de 0,01 à 100 10⁸ W/cm², de préférence de 1 à 10 10⁸ W/cm².

8. Procédé selon l'une des revendications 1 à 7, dans lequel le rayonnement (5) est focalisé sur le revêtement (2) à l'aide d'un élément de focalisation (6), lequel présente une distance focale de 10 mm à 500 mm, de préférence de 50 mm à 200 mm, de façon particulièrement préférée de 60 mm à 100 mm.

9. Procédé selon l'une des revendications 1 à 8, dans lequel le revêtement (2) contient au moins de l'argent ou un oxyde conducteur de l'électricité, transparent.

10. Procédé selon l'une des revendications 1 à 9, dans lequel le revêtement (2) présente une épaisseur inférieure ou égale à 5 µm, de préférence inférieure ou égale à 2 µm, de façon particulièrement préférée inférieure ou égale à 1 µm, de façon tout particulièrement préférée inférieure ou égale à 500 nm.

11. Procédé selon l'une des revendications 1 à 10, dans lequel le substrat (1) contient au moins du verre, de préférence un verre sodo-calcique, ou un polymère transparent, de préférence un polycarbonate.

12. Vitre ayant un revêtement conducteur de l'électricité, au moins comportant un substrat (1) avec un revêtement (2) conducteur de l'électricité, le revêtement (2) présentant au moins un défaut (3), lequel est isolé du revêtement environnant (2) à l'aide du rayonnement (5) d'un laser (4) ayant un profil de faisceau annulaire (P).

13. Vitre selon la revendication 12, dans laquelle le défaut (3) est entouré par une région découverte annulaire (8) ayant une largeur de ligne constante.

14. Vitre selon la revendication 13, dans laquelle la largeur de ligne de la région découverte (8) est de 5 µm à 100 µm, de préférence de 15 µm à 50 µm.

15. Utilisation d'une vitre selon l'une des revendications 12 à 14 ou d'une vitre fabriquée par le procédé selon l'une des revendications 1 à 10 en tant que vitre apte à être chauffée, en particulier vitre de fenêtre d'un bâtiment ou d'un véhicule, ou en tant que constituant d'un vitrage ayant des propriétés optiques commutables ou réglables électriquement, en particulier d'un vitrage électrochrome, d'un vitrage PDLC, d'un vitrage SPD ou d'un vitrage électroluminescent.
